# EUROPÄISCHE PATENTANMELDUNG

(11) **EP 4 851 604 A1**
(43) Veröffentlichungstag der Anmeldung: **09.12.2026**
(21) Anmeldenummer: 26169074.7
(22) Anmeldetag: 30.03.2026
(51) Int. Cl.: G01N 17/00

(54) **KORROSIONSPRÜFGERÄT**

(30) Priorität: 05.06.2025 DE 202025103145 U
(71) Anmelder: Köhler-VLM Testing Technologies GmbH, 59590 Geseke (DE)
(72) Erfinder: MÜLLER, Fabian, 59590 Geseke (DE)
(74) Vertreter: Ter Meer und Partner mbB

(57) **Zusammenfassung**

Korrosionsprüfgerät mit einer Prüfkammer (10), deren Wände aus Edelstahlplatten (24) zusammengesetzt sind, und mit einem Klimatisierungssystem (12) zum Aufrechterhalten einer kontrollierten Atmosphäre in der Prüfkammer (10), wobei die Edelstahlplatten (24) mit einem korrosionsfesten Kleber (26) miteinander verklebt sind.

## Beschreibung

Die Erfindung betrifft ein Korrosionsprüfgerät mit einer Prüfkammer, deren Wände aus Edelstahlplatten zusammengesetzt sind.

Solche Korrosionsprüfgeräte dienen dazu, die Korrosionsbeständigkeit von Maschinenteilen oder anderen Objekten zu testen, indem die Prüfobjekte in der Prüfkammer für eine definierte Zeit einer kontrollierten, korrosionsfördernden Atmosphäre ausgesetzt werden.

Aufgabe der Erfindung ist es, ein Korrosionsprüfgerät zu schaffen, das sich kostengünstig herstellen lässt und dessen Prüfkammer eine hohe chemische Beständigkeit und Dichtheit aufweist.

Diese Aufgabe wird erfindungsgemäß dadurch gelöst, dass die Edelstahlplatten mit einem korrosionsfesten Kleber miteinander verklebt sind.

Da die Fugen zwischen den Edelstahlplatten mit korrosionsfester Klebmasse ausgefüllt sind, lässt sich zuverlässig eine hohe Dichtheit der Prüfkammer gegenüber der korrosiven Atmosphäre erreichen. Ein weiterer Vorteil besteht darin, dass die Fertigungskosten im Gegensatz zu anderen Fügeverfahren wie beispielsweise schweißen verringert sind.

Die Edelstahlplatten können einfach auf Stoß aufeinander gesetzt und miteinander verklebt werden, so dass Raupen aus Klebmasse die zwischen den einzelnen Platten gebildeten Fugen vollständig ausfüllen. Bei höheren Stabilitätsanforderungen können die Platten an den Kanten auch abgewinkelte Flansche aufweisen, die mit der jeweils angrenzenden Edelstahlplatte eine größere Klebfläche bilden.

Geeignete Kleber sind beispielsweise Scheibenkleber für die Fahrzeugindustrie sowie auch Montage- und Konstruktionskleber.

Im folgenden wird ein Ausführungsbeispiel anhand der Zeichnung näher erläutert. Es zeigen:
- Fig.1: eine schematische Schnittdarstellung eines Korrosionsprüfgerätes gemäß der Erfindung; und
- Fig. 2: eine vergrößerte Darstellung von Stoßfugen zwischen drei Edelstahlplatten.

In der Zeichnung ist schematisch ein Teil eines Korrosionsprüfgerätes gezeigt, das eine Prüfkammer 10 aufweist, in der Prüfobjekte für eine bestimmte Zeit in einer kontrollierten Atmosphäre aufbewahrt werden können. Die Atmosphäre wird hinsichtlich Temperatur und chemischer Zusammensetzung, insbesondere Feuchtegehalt, so eingestellt, dass die Korrosion an den Prüfobjekten beschleunigt wird, so dass sich der Korrosionsfortschritt schon nach überschaubarer Zeit feststellen und bewerten lässt.

An die Prüfkammer 10 ist ein Klimaschrank 12 angebaut, der verschiedene nicht gezeigte Aggregate wie Heizeinrichtungen, Befeuchter und dergleichen enthält, mit denen die in die Prüfkammer 10 einzuleitende Luft konditioniert wird. In der Zeichnung ist lediglich eine Leitung 14 dargestellt, über welche die konditionierte Luft mit Hilfe eines Gebläses in die Prüfkammer 10 eingeleitet wird.

In der Wand der Leitung 14 ist ein Fühlfinger 16 so angeordnet, dass er durch die Wand hindurch in das Innere der Leitung 14 ragt. Der Fühlfinger 16 trägt verschiedene Messelemente zur Messung des Feuchtegehalts und der Temperatur der durch die Leitung 14 strömenden Luft.

In der Leitung 14 ist zwischen der Prüfkammer 10 und dem Teil der Leitung, der den Fühlfinger 16 enthält, ein Sperrelement 18 angeordnet, mit dem sich der den Fühlfinger aufnehmende Teil der Leitung 14 strömungsmäßig vom Inneren der Prüfkammer 10 trennen lässt. Das erlaubt es, den Fühlfinger 16 gegen Korrosion zu schützen, wenn die Prüfobjekte während bestimmter Perioden der Testphase einer besonders korrosiven Atmosphäre ausgesetzt werden, beispielsweise wenn in der Prüfkammer 10 (über eine andere Leitung als die Leitung 14) ein Salznebel versprüht wird.

In der Prüfkammer 10 ist ein Messtisch 20 angeordnet, auf dem ein oder mehrere Prüfobjekte 22 abgelegt werden können. Die Prüfobjektes 22 verbleiben für eine gewisse Prüfzeit in der kontrollierten Atmosphäre in der Prüfkammer 10. Die Atmosphäre kann dabei so kontrolliert werden, dass die Korrosionsprozesse an den Oberflächen der Prüfobjekte beschleunigt werden. Nach Ablauf der Prüfzeit werden die Prüfobjekte 22 aus der Prüfkammer 10 entnommen und visuell oder mit Hilfe geeigneter Sensoren auf Korrosionsschäden untersucht.

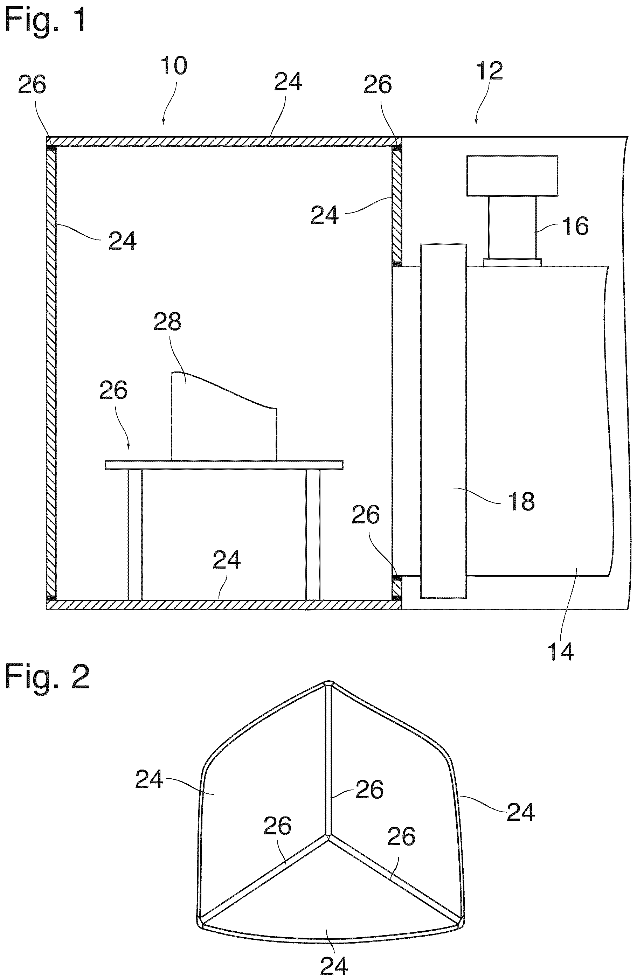

Die in Fig. 1 im Schnitt dargestellten Wände der Prüfkammer 10 werden durch Edelstahlplatten 24 gebildet, die an den Kanten auf Stoß aneinander gesetzt sind und durch Klebraupen eines korrosionsfesten Klebers 26 miteinander verklebt sind. Eine der Edelstahlplatten 24 weist eine Öffnung für die durch ein Edelstahlrohr gebildete Leitung 14 auf, die ebenfalls mittels einer Klebraupe in die Wand der Prüfkammer eingeklebt ist.

In Fig. 2 sind vergrößert drei Klebraupen des Metallklebers 26 gezeigt, die drei rechtwinkelig aufeinander treffende Fugen zwischen drei Edelstahlplatten 24 ausfüllen und stabil und gasdicht verbinden. Wahlweise können fünf der Edelstahlplatten 24 eine zunächst offene Wanne bilden, die dann durch eine ebenfalls aus geklebten Edelstahlplatten gebildete Haube gasdicht abgeschlossen wird.

## Patentansprüche

1. Korrosionsprüfgerät mit einer Prüfkammer (10), deren Wände aus Edelstahlplatten (24) zusammengesetzt sind, und mit einem Klimatisierungssystem (12) zum Aufrechterhalten einer kontrollierten Atmosphäre in der Prüfkammer (10), **dadurch gekennzeichnet, dass** die Edelstahlplatten (24) mit einem korrosionsfesten Kleber (26) miteinander verklebt sind.
